(19) **Europäisches Patentamt / European Patent Office / Office européen des brevets**

(11) **EP 4 632 468 A1**

(12) **EUROPEAN PATENT APPLICATION**

(43) Date of publication:
**15.10.2025  Bulletin 2025/42**

(21) Application number: **24170049.1**

(22) Date of filing: **12.04.2024**

(51) International Patent Classification (IPC):
**G02B 27/09** (2006.01)   **H01S 3/00** (2006.01)
**H01S 3/23** (2006.01)

(52) Cooperative Patent Classification (CPC):
**G02B 27/0927; G02B 27/0988; H01S 3/005;**
**H01S 3/2308**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **UAB "Ekspla"**
**02300 Vilnius (LT)**

(72) Inventors:
• **MICHAILOVAS, Kirilas**
**02300 Vilnius (LT)**
• **MICHAILOVAS, Andrejus**
**02300 Vilnius (LT)**

(74) Representative: **Draugeliene, Virgina Adolfina**
**Tarpine Ltd**
**A. P. Kavoliuko g. 24-152**
**04328 Vilnius (LT)**

(54) **LASER BEAM APODIZATOR FOR HIGH-ENERGY LASER SYSTEMS, HIGH-ENERGY LASER SYSTEM, AND GENERATION METHOD OF HIGH-ENERGY LASER RADIATION**

(57) The invention relates to laser beam apodizators for use in high-energy laser systems with at least one laser or parametric amplification module. The invention also relates to high-energy laser systems and high-energy laser radiation generation methods. It is aimed to form a laser beam of a modified profile in order to achieve the highest possible efficiency of the amplifiers of the laser system and at the same time to ensure low diffraction of the beam when it propagates through the optical elements and in free space inside and outside the laser system. A particular focus is paid to beam propagation through optical elements of a finite diameter in order to minimize the modulation of the beam spatial profile due to diffraction effect on the edges of the active media apertures. A family of functions suitable for laser beam profiles is proposed. The solution allows to increase the efficiency of the laser system of several amplification stages, compared to identical systems in which the Gaussian beam propagates. At the same time, the solution allows to build a laser system of a simpler design and lower price, compared to systems in which the super-Gaussian beam with the flat top is formed.

Fig. 1

EP 4 632 468 A1

**Description**

TECHNICAL FIELD OF THE INVENTION

The invention relates to laser beam apodizators for use in high-energy laser systems containing one or more laser or parametric amplification modules. The invention also relates to high-energy laser systems and high-energy laser radiation generation methods. It is aimed to form a laser beam of a modified profile in order to achieve the highest possible efficiency of the amplifiers of the laser system and at the same time to ensure low diffraction of the beam when it propagates through the optical elements and in free space inside and outside the laser system. A particular focus is paid to beam propagation through optical elements of a finite diameter in order to minimize the modifications of the laser beam spatial profile, especially, to minimize the modulation of the profile due to diffraction effect on the edges of the active media apertures.

BACKGROUND OF THE INVENTION

The high-energy laser system is usually a complex assembly of many laser modules in which linear and non-linear, such as parametric, amplification stages are integrated. In linear laser amplifiers, it is aimed to utilize the energy stored in active media as efficiently as possible. And this is a certain challenge when amplifying ultrashort pulses. Real-world amplification systems of ultrashort pulses are several meters long. Because of a very high peak power, and hence high intensity, ultrashort pulses experience nonlinear interaction during amplification in the active medium and in other elements of the amplifier. Nonlinear interaction with optical elements can lead to undesirable effects such as self-focusing (also known as spatial self-phase modulation), which can focus the beam as a whole. This limits the maximum energy that can be achieved in the active media of a finite diameter. But the maximum achievable power and energy is further reduced if the spatial distribution of the beam (the intensity distribution with respect to the radial distance from the beam axis, also referred to as the beam profile) is modulated. In the presence of a small-scale modulation of the beam profile, the intensity peaks can locally cause damage to optical elements due to local nonlinear self-focusing. The smaller the beam profile modulation, the higher the energy of the laser radiation can be achieved.

When designing complex optical systems, it is important that the laser beam diffracts weakly: both during propagation through free space for a sufficiently large distance, and also on the edges of optical elements. An example of a weakly diffracting beam is a beam with a Gaussian function profile described by this formula:

$$I_{G}(r) = I_{max} \cdot \exp\left[-2\left(\frac{r}{w_{G}}\right)^{2}\right],$$

where $I_{G}(r)$ is an intensity dependent on a radial distance $r$, $I_{max}$ is the maximum intensity on the beam axis, $w_{G}$ is a radius of the Gaussian profile at the $I_{max}/e^{2}$ intensity level. The Gaussian beam which is not apertured in a transverse plane travels a long distance maintaining the Gaussian profile. This property is highly valued, both in scientific applications and in laser technology. However, the intensity profile of the Gaussian function has no limit in the transverse direction: its wings weaken moving away from the beam axis but can extend to infinity. Optical elements and, most importantly, active media in laser systems always have a finite diameter. This means that the Gaussian beam, which is considered ideal, is always constrained by the apertures of the optical elements, so the wings of the beam are cut off, and a certain diffraction-caused modulation occurs in the intensity distribution. An amplitude of this modulation can be reduced by constraining the Gaussian beam at the lowest possible intensity level. However, when reducing the beam diameter, the filling up of the active medium with laser radiation and the overall efficiency of the laser system decreases.

A radius of the weakly diffracting Gaussian beam at an intensity level of $0.001I_{max}$ is 1.858 times larger than a radius at an intensity level of $I_{max}/e^{2}$. Applying the criterion that the aperture of the active medium constrains the beam at the intensity level not higher than $0.001I_{max}$, the diameter of the beam (which is defined at the intensity level of $I_{max}/e^{2}$), at the entrance plane of the medium, must be 1.858 times smaller than a working diameter of the active medium. The radius (and a diameter) of the beam at the intensity level of $0.001I_{max}$ is 3.157 times larger than the radius (and the diameter, respectively) at the intensity level of $0.5I_{max}$. This means that the active media are poorly filled with seed radiation and it is impossible to utilize all the population inversion created by pumping. The radius (the diameter) of the Gaussian beam at the $0.0001I_{max}$ intensity level is 2.145 times larger than the radius (the diameter) at the $I_{max}/e^{2}$ intensity level, and even 3.645 times larger than the radius (the diameter) at the $0.5I_{max}$ intensity level. Thus, applying the criterion that the aperture of the active medium constrains the beam at the intensity level not higher than $0.0001I_{max}$, this would further reduce the utilization of the population inversion stored in the active medium. The $0.001I_{max}$ criterion is more often applied, but the utilization of population inversion is still not high.

When designing complex laser systems, an optimal solution is sought for the best possible efficiency of the laser system and at the same time for preserving the beam intensity distribution during propagation of the beam through the laser system. Shaping of the laser beam is often done. A number of different beam shaping methods have been developed: using aspheric lens systems, diffractive optical elements, liquid crystal spatial modulators, absorptive dye cells, serrated apertures or spatially inhomogeneous waveplates. Most often a beam with a super-Gaussian (SG) function profile is formed from a Gaussian beam. The super-Gaussian spatial profile is described by the formula:

$$I_{SG}(r) = I_{max} \cdot \exp\left[-2\left(\frac{r}{w_{SG}}\right)^{2n}\right],$$

where $I_{SG}(r)$ is the intensity dependent on the radial distance $r$, $I_{max}$ is the intensity on the beam axis, $w_{SG}$ is a radius of the shaped super-Gaussian beam at the $I_{max}/e^2$ intensity level, $n$ is any integer, $2n$ is an order of the SG function. The SG profile features a flatter top and steeper slopes (wings) than the Gaussian profile. In other words, close to the beam axis, the intensity of the SG beam changes slowly, and, starting from a certain radial distance from the beam axis, the intensity decreases with the increasing radial distance $r$ according to a nonlinear function faster than that of the Gaussian profile. Usually, the SG beam is formed with a diameter at the $0.5I_{max}$ or even at the $I_{max}/e^2$ intensity level larger than that of the Gaussian beam. Therefore, the SG beam fills the aperture of the active medium better and uses the energy stored in the active medium more efficiently. However, during the free-space propagation, laser beams with steep slopes of the profile diffract significantly faster than the Gaussian beam: SG beams get modified quickly enough, modulation in the intensity distribution appears. A distance at which the SG beams get modulated to a certain extent depends on the order of the super-Gaussian function and the transverse dimensions of the beam. The higher the order of the SG function, the steeper the slopes of the laser beam, the flatter the top, and the faster the spatial modifications of the beam appear. Without additional means, the SG profile remains unchanged within a sufficiently small distance, which limits the length of laser amplifiers to a few tens of centimeters. To build longer optical systems, image relay optical systems are employed, with the help of which the SG profile is reproduced at a certain plane in space (referred to as an image plane). Diffraction on the edges of optical elements also contributes to the modulation of the spatial beam profile. In order to reduce the modulation, the diameter of the beam is adjusted to the diameters of the optical elements in such a way that the wings of the beam are constrained at the lowest possible intensity level (where the intensity of the beam does not exceed a predetermined value). In this way, the contribution of diffraction on the apertures of the optical elements to the overall modulation of the beam profile is reduced.

In summary, the Gaussian beams propagate in space most ideally, but the intensity distribution of the Gaussian function is not optimal for achieving the highest possible efficiency of the laser system. It is only suitable for building low-energy laser systems. On the contrary, high efficiency of the laser system can be achieved with beam profiles of the super-Gaussian function, but these beams do not preserve the initial profile during propagation, they diffract, as a result of which high-intensity peaks appear in the spatial distribution and there is a risk of optical elements damage. The utilization of the super-Gaussian beam profile in the optical circuit of a laser amplifier requires image relaying. The image relay optical elements together with vacuum cuvettes make the system large and complex. This solution of the laser system design is unavoidable and necessary in ultrashort pulse amplification systems of ultra-high average power and high pulse energy, where the cost of the system is one of the important factors. When designing intermediate ultrashort pulse amplification systems of moderate power and energy parameters, a compactness is important. For these systems, sacrificing the efficiency the shortest total optical length of the system and the smoothest beam profile are important. In order to improve the efficiency of the laser system, compared to the systems in which the Gaussian beam propagates, a different profile can be selected - one which, in addition to the improved efficiency, guarantees weak diffraction. In order to avoid the challenges associated with the use of image relay telescopes and vacuum cuvettes, a spatial beam intensity distribution is required which can propagate a distance typical to high-energy laser systems without image relaying.

There are beam shapers, soft apertures and apodizators referred in literature. All of them carry out a modification of the spatial intensity distribution of the input beam, usually characterized by a Gaussian profile, in order to achieve predetermined goals. High average and peak power laser systems usually employ serrated apertures (in combination with a spatial filtering optical system) and spatially inhomogeneous polarization control elements (in combination with polarizers) or their combinations.

P.K.Rambo et al. Applied Optics 44, p. 2421 (2005) describes a laser beam apodizator for use in a high-energy laser system and a high-energy laser system comprising multiple laser amplification stages. Said laser beam apodizator, from a circular-symmetry Gaussian beam, forms a square-symmetry beam profile with a flattened top (an order of the SG function is not specified). The apodization of the beam allowed to attain higher pulse energy and peak power than would be achieved without apodization. The core element of the apodizator of said solution is the serrated aperture of a square symmetry - a diaphragm characterized by a rounded-square hole having a toothed edge. The operation of the serrated aperture is based on diffraction of laser radiation on edges of the hole of the serrated aperture when radiation passes through it. Blocking radiation which diffracts at large angles with the help of a spatial filter results in a flat-top beam in some plane on the beam propagation axis. In said laser system, image relay optical systems are required before each subsequent amplification stage, which transfer the image of the shaped flat-top beam from the aforesaid plane to other planes located inside further amplification stages. Without image relay, the flat-top beam would not preserve its profile in an entire length of the system.

S.Toth et al., Journal of Physics: Photonics 2, 045003 (2020) describes another laser beam apodizator for use in the high-energy laser system and a high-energy laser system comprising multiple laser or parametric amplification stages. The apodizator is composed of a circular-symmetry serrated aperture and a spatial filter, which together form a flat-top beam of circular symmetry from the Gaussian input beam in a certain plane. Beam shapers designed to form flat-top beam profiles from Gaussian beams which use serrated apertures and spatial filtering optical systems are very inefficient: only the central part of the initial Gaussian beam is utilized. The efficiency of the serrated aperture-based beam shapers is of the order of 10%. Aiming for ultra-high power and energy, the overall system efficiency is very important, because compensating for losses by adding more amplification stages costs a lot. After shaping and amplifying the beam in the first stage of linear amplification, the image of the beam is transmitted to further stages by image relay optical systems, but due to the extremely high power and energy of the system, additional technical tasks arise - the image relay telescopes must include vacuum cuvettes, which not only increase the price of the systems and causes losses, but also greatly increases dimensions of the system.

S.Jorna et al. patent no. US3990786 describes an absorptive dye cell type beam apodizator. The solution aimed to shape the intensity profile of the collimated laser beam in such a way as to reduce the self-focusing caused by the diffraction of the beam on the edges of the active media of the laser amplifiers. At the same time an optimal solution was sought: to minimize diffraction effects and to save as much beam energy as possible during beam shaping. A design of the dye cell is presented in which the absorptive dye is only at a periphery of the cell. The cell is formed between a metal mounting unit and two glass windows, where one of the glass windows is aspheric. The aspheric and flat glass windows have a contact at the center, so there is no dye at the center of the cell. Away from the center of the cell, the aspheric glass window forms a cavity which is filled with dye. The shape of said aspheric window is chosen so that at the edges of the dye cell, due to absorption in the dyes, the intensity of the laser radiation decreases to a level of $0.1I_{max}$, where $I_{max}$ is the intensity of the beam in the center of the beam profile. Losses at the slopes of the beam profile increase according to a nonlinear function $(r-r_0)^n$. The attenuation criterion defined in the *S.Jorna et al.* solution is satisfied by the absorption function of the fourth degree with respect to the radial distance from the center of the dye cell. However, simulations and experimental tests according to the description of the above solution were performed only with a uniformly illuminated entrance aperture of the apodizator. Since the absorption function of the dye cell is defined, rather than a function of the formed profile, the result will depend on the profile and diameter of the input beam. Inputting the Gaussian beam into said apodizater, only the wings of the profile would also be affected. However, intensity attenuation up to $0.1I_{max}$ at the edges of the apodizator may not be sufficient for high-energy laser systems - edges of an aperture of the dye cell itself and of the amplifier would work as a hard aperture causing diffraction. In the solution of *S.Jorna et al.*, simulations with uniform illumination of the entrance aperture of the apodizator showed that, after propagating 8 meters in free space, a laser beam (wavelength 1.06 $\mu$m) of 100 mm in diameter still looks similar to that immediately behind the apodizator, but the intensity modulation already begins to show up (after 8 m still does not exceed 5%). If the active medium of a smaller diameter were used, the beam of a smaller diameter would have to be formed. The beam of a smaller diameter acquires the same modulation value at a shorter distance. The use of a dye cell for beam shaping purposes has the following disadvantages: it is necessary to select an absorptive material which exhibits linear absorption for a particular wavelength used and which is resistant to laser radiation; a refractive index of the dye solution must match the refractive index of the glass windows constituting the dye cell in order the dye solution does not affect the wavefront of the beam. Due to the high temperature coefficient of refractive indices of liquids, the discussed beam shaping solution is not suitable for high repetition rate (>1 Hz) systems.

Another similar beam shaping solution with absorptive dye cells is described in L.M. Vinogradsky et al., Proc. SPIE 3683, p. 186 (1998). It defines a requirement that the apodizator achieves intensity attenuation at the edges of the profile with respect to that at the center of the profile equal to 1000:1, i. e. intensity at the edges of the apodizator achieves $0.001I_{max}$. This requires a transmission function of the apodizator proportional to $(r-r_0)^N$ or $r^N$, where $N$ is an integer in the range from 6 to 10. In the solution of *L.M. Vinogradsky et al.*, the absorptive dye cell is formed between a metal mount, a flat glass window and an aspheric glass optical element which is of the shape of a meniscus. The laser beam propagating through the meniscus-shaped optical element passes through the same thickness of glass in all transverse coordinates. This feature leads to a greater tolerance for the mismatch between refractive indices of the glass and the dye. Refractive indices can differ by up to $\Delta n$=0.1, while the wavefront of the beam will remain undistorted. Thus, choosing a dye solution and glass with matching refractive indices reduces the requirement for temperature maintenance (temperature can vary by several degrees while the apodizator will work as intended). On the other hand, with good temperature control, there is a freedom to choose the dye with a refractive index differing from that of the glass. However, this type of beam shapers with liquid dyes is still not suitable for laser systems of the high repetition rate.

Other disadvantages of the *S.Jorna et al.* and *L.M. Vinogradsky et al.* solutions: they require high precision of the aspheric optical element and the whole dye cell construction, fast and uniform removal of the heat, mixing and refill equipment for the dye solution. The edge of the beam profile to be formed is very sensitive to an accuracy of the shape of the aspheric optical element.

The closest prior art apodizator for use in high-energy laser systems is the solution of *S.Jorna et al.* because it introduces minor changes in the intensity distribution such that: when comparing the modified profile with the input beam profile, an intensity change increases with an increasing radial distance *r* from the optical axis of the beam. The apodizator in the *S.Jorna et al.* solution is configured to modify edges of the input beam profile more than the central part, so the edges of the modified profile differ more from the edges of the input beam profile than differ central parts. The solution *S.Jorna et al.* defines a function of losses of the apodizator, rather than a function of the beam profile to be formed. If the input beam were Gaussian, the beam of the modified profile would be characterized by the following features:

- an intensity uniformly decreases according to a nonlinear function with the increasing radial distance from the optical axis of the beam;
- at a predetermined radial distance from the optical axis of the beam, the intensity of the beam does not exceed a preset value.

The closest prior art high-energy laser system is described in J.Adamonis et al., Applied Optics 55, p. 8007 (2016). The laser system consists of several stages of laser and parametric amplification, in which an apodizator is placed in front of the first power amplifier on the optical axis of the system, which forms a beam of the super-Gaussian function profile from the Gaussian profile input beam. A diameter of the super-Gaussian beam at an intensity level not higher than $0.5I_{max}$ is larger than a diameter of the Gaussian input beam. A beam shaper described in another patent EP2965852 of the author of this invention is used as the apodizator, the principle of operation of which is as follows: a spatially inhomogeneous waveplate performs polarization rotation of an initial linear polarization; said rotation of polarizations depends on a transverse coordinate; a polarization analyzer place further introduces intensity losses. The resultant beam exhibits the super-Gaussian profile. When shaping the super-Gaussian profile of 2n=12 order, shaping efficiency of over 50% has been achieved. Since the SG profile with steep slopes was formed, and as many as five laser amplification modules followed the beam shaper, the beam profile was transported to each of the amplification module by image relay optical systems. In order to reduce an influence of the finite size of apertures of the active media, the solution of *J.Adamonis et al.* defines that 1) the diameter of the profile of the formed beam profile is such that entrance apertures of the active media truncate it at $0.001I_{max}$ intensity level, and 2) a value of the maximum intensity $I_{max}$ of the formed super-Gaussian beam is at least by 10% lower than the damage threshold of the optical elements, because in the intermediate planes between an object and image planes, the super-Gaussian beam undergoes strong intensity modulations. To yet improve propagation of the laser beam in a long laser system, a phase corrector has been additionally used. To summarize, the beam of the modified profile which has been formed in the solution of *J.Adamonis et al.* has the following characteristics:

- its diameter at an intensity level of $0.5I_{max}$ is larger than the diameter of the Gaussian input beam at the intensity level of $0.5I_{max}$;
- starting from a certain radial distance from the beam axis of the modified profile, the beam intensity uniformly decreases according to a nonlinear function with the increasing radial distance from the optical axis of the beam, and
- at a predetermined radial distance from the optical axis of the beam of the modified profile, which is related to dimensions of the subsequent optical elements of the laser system, the intensity does not exceed the preset value, which is equal to $0.001I_{max}$.

The closest prior art method of generation of high-energy laser radiation is also described in J.Adamonis et al., Applied Optics 55, p. 8007 (2016). The method comprises:

- direction of an input beam of the Gaussian profile to the apodizator, where it is modified by forming the beam of the modified super-Gaussian profile,
- amplification of the beam of the modified profile by directing it to the first amplification module of the laser system and amplification of the beam obtained at the output of the first amplification module in several other amplification modules of the system, where the beam of the modified profile is characterized by the following features:
- its diameter at the intensity level of $0.5I_{max}$ is larger than a diameter of the Gaussian input beam at the intensity level of $0.5I_{max}$;
- starting at a certain radial distance from the axis of the beam of the modified profile, the intensity decreases uniformly according to a nonlinear function with the increasing radial distance from the optical axis of the beam, and
- at a predetermined radial distance from the axis of the beam of the modified profile, which is related to dimensions of the subsequent optical elements of the laser system, the intensity does not exceed the preset value, which is equal to $0.001I_{max}$.

The main drawback of *Adamonis et al.* laser system and high-energy radiation generation method is that the modified profile which is formed has a shape of the super-Gaussian function, so the beam diffracts quickly during propagation in free space. The second drawback is that said preset value where apertures of further optical elements of the system truncate the propagating laser beam is $0.001 I_{max}$. This leads to noticeable diffraction. Therefore, laser beam transmission between adjacent amplification stages must be performed by image relay optical systems. The need image relay optical systems increases the cost, size and complexity of the whole laser system.

TECHNICAL PROBLEM TO BE SOLVED

The aim of this invention is to shape a beam profile (spatial intensity distribution) which fills the active medium reasonably well, but does not undergo diffraction on the edges of the medium, and also which changes minimally during propagation of the beam over a distance of several meters characteristic to laser systems or laser micromachining machines. The aim is to formulate qualitative and quantitative criteria for a beam profile suitable for the realization of a high-energy multi-stage amplification laser system. More specifically, this invention aims to create the means to form such a spatial beam profile that would propagate without image relaying a distance typical for laser amplification systems (from 1 to 4 meters), and in which the intensity modulation amplitude would not exceed 10% of the maximum intensity. The shaped profile of the beam at the specified radial distance from the center of the beam should have an intensity not exceeding $0.0001 I_{max}$ in order to minimize the influence of beam diffraction on the edges of the apertures of active media on homogeneity of the profile. The desired profile is a smooth intensity distribution similar to the Gaussian function, which is described by a simple analytical formula, applicable to laser beams and active media of various diameters. Yet an additional aim of this invention is to propose a method for forming such a beam profile from the initial Gaussian beam while maintaining the original beam power and energy as much as possible, i.e. to achieve at least 70% beam shaping efficiency.

DISCLOSURE OF THE INVENTION

Aspects of the disclosure are as set out in the independent claims and optional features are set out in the dependent claims. Aspects of the invention may be provided in conjunction with each other and features of one aspect may be applied to other aspects.

In a first aspect there is provided a laser beam apodizator for using in high-energy laser systems comprising one or more amplification modules, which is configured to modify a profile of an input beam and to form a beam of a modified profile, wherein an intensity change, when comparing the modified profile with the profile of the input beam, increases with an increasing radial distance r from an optical axis of the beam, and wherein the modified profile is characterized by the following features:

- intensity uniformly decreases according to a nonlinear function with the increasing radial distance r from the optical axis of the beam and
- at a predetermined radial distance $r_{NUM}$ from the optical axis of the beam, the intensity of the beam does not exceed a preset value, wherein
- the nonlinear function, according to which the intensity of the beam of the modified profile decreases with the increasing radial distance r from the optical axis of the beam, is selected so that an amplitude of an intensity modulation of said beam, which has traveled a distance of at least two meters in free space, does not exceed 5%,

- at the predetermined radial distance $r_{NUM}$ from the optical axis of the beam, its intensity does not exceed a value of $0.0001 I_{max}$, where $I_{max}$ is a maximum intensity value on the beam axis,
- the predetermined radial distance $r_{NUM}$ is no more than two times larger than a radial distance at an intensity level of $I_{max}/e^2$.

According to a preferred embodiment of the present invention the nonlinear function, according to which the intensity of the beam of the modified profile decreases with the increasing radial distance r from the optical axis of the beam, is a function $I_{cosN}(r)$:

$$I_{cosN}(r) = I_{max} \cdot \begin{cases} \left(\cos\left(\dfrac{\pi}{2 r_A} \cdot r\right)\right)^N, & (-r_A \leq r \leq r_A) \\ 0, & (r < -r_A) \text{ and } (r > r_A) \end{cases},$$

where $I_{max}$ is an intensity on the optical axis of the beam of the modified profile, $r_A$ is a radial distance from the optical axis of the beam at which the intensity decreases down to a value of $I=0$, and $N$ is a degree of the function which is a real number between 1.0 and 8.0.

The predetermined radial distance $r_{NUM}$ from the optical axis of the beam is equal to the radial distance $r_A$ at which the intensity decreases to the $I=0$ value.

In some examples, the apodizator is a beam shaper which comprises sequentially arranged on the optical path of the beam:

- at least one serrated aperture, an operation of which is based on the diffraction of passing-through radiation on edges of a hole of the serrated aperture, and
- a spatial filtering optical system destined to block radiation diffracted at large angles.

In some examples, the hole of the serrated aperture is edged by ring-arranged tapered teeth, the tips of which are directed to a center of the hole, wherein parameters of the serrated aperture such as a diameter $d$ of the hole, a height $h$ of the teeth and a shape parameter $s$ of the teeth can be changed to get the desired shape of the modified profile of the beam.

In some examples the apodizator is a beam shaper configured to create uniformly spatially variable losses due to radial distance-dependent absorption.

In some examples the apodizator is a beam shaper configured to create uniformly spatially variable losses due to radial distance-dependent impact on polarization, and filtering of a depolarized light.

In a second aspect of the invention, there is provided a high-energy laser system comprising an apodizator and one or more sequentially optically connected amplification modules located on an optical axis of the system, wherein the apodizator is configured to form a beam of a modified profile from a Gaussian input beam, said beam of the modified profile having the following features:

- its diameter at an intensity level of $0.5I_{max}$ is larger than a diameter of the Gaussian input beam at the intensity level of $0.5I_{max}$, wherein $I_{max}$ is a maximum intensity value on the axis of the beam,
- at a predetermined radial distance $r_{NUM}$ from the axis of the beam of the modified profile, which is related to dimensions of subsequent optical elements of the laser system, its intensity does not exceed a preset value,
- and the beam of the modified profile formed by the apodizator is directed to the first of one or more amplification modules present in the system, wherein

the apodizator is configured according to any one of claims 1 to 7, and a diameter of the beam of the modified profile at an entrance plane of a laser or parametric gain medium of the first amplification module, at an intensity level not higher than $0.0001I_{max}$, does not exceed a working diameter $D_5$ of said gain medium.

An optical length of the system is in the range from 1 to 4 meters.

In a third aspect of the invention, there is provided a method of generation of high-energy laser radiation, comprising:

- direction of an input beam of a Gaussian profile to an apodizator and modification of the Gaussian profile of the input beam with the apodizator, thus forming a beam of a modified profile,
- amplification of the beam of the modified profile by directing it to the first of one or more amplification modules of a laser system and, if necessary, amplification of the beam obtained at an output of the first amplification module in other amplification modules of the laser system, wherein
- said beam of the modified profile characterized by the following features:
  intensity uniformly decreases according to a nonlinear function with the increasing radial distance $r$ from the optical axis of the beam, while a diameter at an intensity level of $0.5I_{max}$ is larger than a diameter of the Gaussian input beam at the intensity level of $0.5I_{max}$, wherein $I_{max}$ is a maximum intensity value on the axis of the beam of the modified profile, and,
- at a predetermined radial distance $r_{NUM}$ from the axis of the beam of the modified profile, which is related to dimensions of subsequent optical elements of the laser system, its intensity does not exceed a preset value, wherein
  the apodizator modifies the Gaussian profile of the input beam forming the beam of the modified profile having the following features:
- at the predetermined radial distance $r_{NUM}$ from the optical axis of the beam of the modified profile, intensity does not exceed a value of $0.000I_{max}$,
- while the predetermined radial distance $r_{NUM}$ is no more than two times larger than a radial distance at an intensity level of $I_{max}/e^2$,
- a diameter of the beam of the modified profile at an entrance plane of a laser or parametric gain medium of the first amplification module, at an intensity level not higher than $0.0001I_{max}$, does not exceed a working diameter $D_5$ of said gain medium.

According to a preferred embodiment of the present invention the nonlinear function which defines a uniform intensity decrease of the beam of the modified profile with an increasing radial distance $r$ from the optical axis of the beam of the modified profile is a function $I_{cosN}(r)$:

$$I_{cosN}(r) = I_{max} \cdot \begin{cases} \left( \cos\left( \frac{\pi}{2r_A} \cdot r \right) \right)^N, & (-r_A \leq r \leq r_A) \\ 0, & (r < -r_A) \text{ and } (r > r_A) \end{cases},$$

where $I_{max}$ is an intensity on the optical axis of the beam of the modified profile, $r_A$ is a radial distance from the optical axis of the beam at which the intensity decreases down to a value of $I$=0, and $N$ is a degree of the function which is a real number between 1.0 and 8.0.

Said modified profile of the beam, aiming to reproduce the desired shape of the beam profile, is changed by changing the degree $N$ of the function $I_{cosN}(r)$, which is determined by parameters of the apodizator.

In some examples, amplification of the beam of the modified profile is carried out in at least two amplification modules, where a beam obtained at the output of the first amplification module is directed to the second amplification module, after adjusting the diameter of the directed beam according to a working diameter $D_9$ of a gain medium of the second amplification module, and if more amplification is needed, the analogous actions are repeated by directing the beam to further amplification modules.

ADVANTAGES OF THE INVENTION

The detailed description and claims of the invention describe a family of beam profiles that meet the criteria for a beam profile suitable for a high-energy laser system containing multiple amplification modules. Examples of laser beam apodizators for obtaining the aforesaid profiles and a result of the experimentally obtained profile are described. The solution of this invention of the weakly diffracting laser beam allows a very simple implementation of a high-energy, high-average-power parametric or laser amplification system layout without image relaying and with minimal loss of an overall efficiency of the amplification system. This makes the system simpler and easier to maintain, and allows for a significant reduction of the price. In the $I_{cosN}(r)$ function proposed by this invention, the intensity change rate with respect to a radial distance from the beam axis results in slow beam diffraction when the beam propagates through free space: the intensity modulation amplitude does not exceed 5% after the beam has traveled a distance of at least 2 meters in free space. The amplitude of the intensity modulation due to a sum effect - propagation of the beam in free space and diffraction on edges of optical elements - does not exceed a preset value of 10%.

BRIEF DESCRIPTION OF THE DRAWINGS

Fig. 1 - optical layout of the laser system of this invention containing multiple amplification stages and in which a weakly diffracting beam is formed, ensuring higher system efficiency than of systems without beam shaping.

Fig. 2 - comparison of the cos/V-type beam profiles of this invention mutually and with the Gaussian profile, when a radius of the Gaussian beam at an intensity level of $I$=0.001$I_{max}$ is equal to a radius of the cosN beam, at which $I$=0.

Fig. 3 - comparison of the cosN-type beam profiles of this invention mutually and with the Gaussian profile, when a radius of the Gaussian beam at an intensity level of $I$=0.001$I_{max}$ is equal to a radius of the cosN beam, at which $I$=0.0001$I_{max}$.

Fig. 4 - computer simulation results of the Gaussian beam propagation in free space, when, at the beginning of the system, the beam is apertured at the intensity level of 0.001$I_{max}$.

Figs. 5, 6, 7 - computer simulation results of the cos2 beam propagation in free space, when the beam is not apertured and when it is apertured at the intensity level of 0.0001$I_{max}$ at the beginning of the system.

Figs. 8, 9 - beam profile that can be formed by a beam shaper which uses a single serrated aperture; comparison of the profile at $z$=0 and $z$=2.5 m distances (computer simulation results).

Figs. 10, 11 - comparison of beam profile formed by the beam shaper using a single serrated aperture depicted in Figs. 8, 9 with cos2 and cos2.4 profiles.

Fig. 12 - optical layout of the diffractive beam shaper using a single serrated aperture.

Fig. 13 - example of a serrated aperture, which can be used to form the beam profile depicted in Figs. 8, 9.

Fig. 14 - example of a beam shaper based on uniformly spatially variable losses.

THE BEST IMPLEMENTATION OPTIONS OF THIS INVENTION

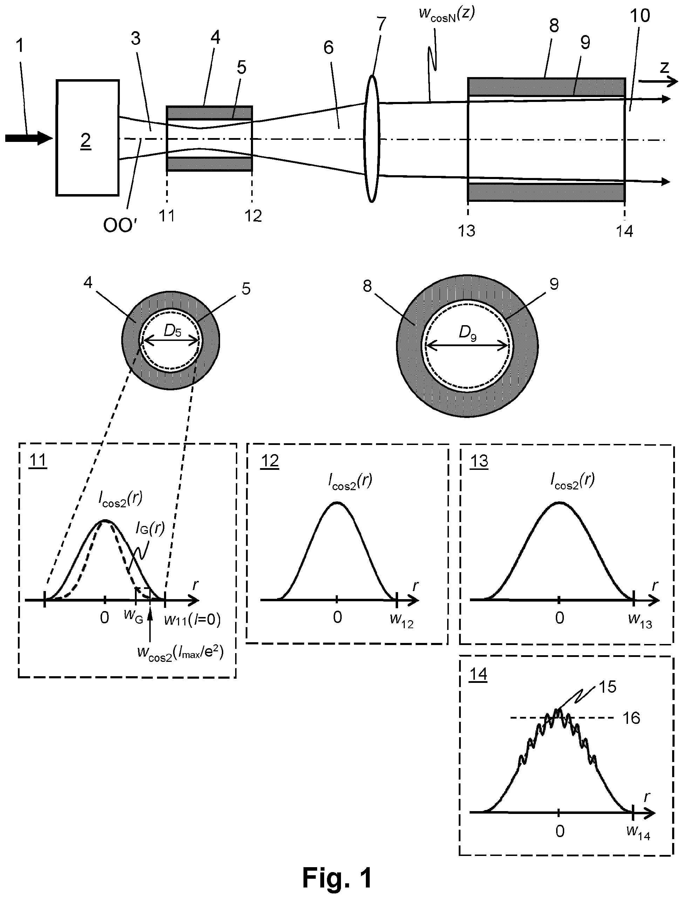

The laser system containing multiple amplification stages of the present invention (Fig. 1) has the following elements:

1 - an input laser beam, that has propagated from an oscillator or a preceding stage of the laser system or from a beam transport and magnification device located downwards the oscillator or the preceding stage of the laser system;
2 - an apodizator;
3 - a shaped beam of a modified profile;
4 - the first amplification module containing the first active medium 5;
6 - the beam obtained at an output of the first amplification module 4;
7 - a lens or a lens system for collimation and/or alteration of a diameter of the beam 6 amplified in the first amplification module 4;
8 - the second amplification module containing the second active medium 9;
10 - an output laser beam.

The qualitative criteria for the profile of said beam 3 of the modified profile can be defined as follows:

- it is wider than the Gaussian profile,
- its slopes are steeper than the slopes of the Gaussian profile,
- at a certain radial distance which is not much larger than a radius at an intensity level of $I_{max}/e^2$, the intensity is less than or equal to $0.0001 I_{max}$, preferably equal to zero,
- the beam propagates through the entire laser system of a standard length without using image relay systems while, at the same time, avoiding strong intensity modulation, i.e. the beam is weakly diffracting.

The apodizator 2 forms a weakly diffracting laser beam 3, the profile of which differs from the Gaussian profile. The input beam 1 usually has a Gaussian profile, but, generally, it can be of any profile obtained in a real system - at the output of the oscillator or the preceding stage of the laser system. The shaped modified profile of the beam ensures higher efficiency of the laser system of the present invention than that of a system without beam shaping (apodization) in which the Gaussian beam propagates. The apodizator 2 forms the beam of the modified profile from the input beam 1, which, for example, has a Gaussian profile (the desired modified profile is formed in a plane 11). The intensity variation of the modified profile is bell-shaped but flatter than the Gaussian function close to the beam axis OO', while, moving away from the beam axis OO' in the radial direction $r$ towards the edges, intensity rapidly decreases to zero.

Such an intensity profile can be described by a truncated $cosN$-type function:

$$I_{cosN}(r) = I_{max} \cdot \begin{cases} \left(\cos\left(\frac{\pi}{2r_A} \cdot r\right)\right)^N , & (-r_A \leq r \leq r_A) \\ 0 , & (r < -r_A) \text{ and } (r > r_A) \end{cases} .$$

$r_A$ is a radial distance from the beam axis at which the intensity decreases to zero, $I_{max}$ is the intensity on the beam axis, $N$ is a real number, not necessary integer, which can be referred to as a degree of the $I_{cosN}(r)$ function.

Notations:

Planes 11, 12 represent entrance and exit planes or front and back ends of the first active medium 5, planes 13, 14 represent the entrance and exit planes (front and back ends) of the second active medium 9.

$w_{cosN}(z)$    is a radius of the formed beam of a modified profile at a selected intensity level along the beam propagation direction $z$;

$I_{cos2}(r)$ -    a truncated $cosN$-type function with $N=2$;

$w_{cos2}$ -    a radius of the formed beam with a profile of said $I_{cos2}(r)$ function (hereinafter referred to as $cos2$ beam) at the intensity level of $I_{max}/e^2$ in the entrance plane 11 of the first active medium 5;

$w_{11}$ -    a radius of the formed cos2 beam, at which the intensity equals zero ($I=0$), in the entrance plane 11 of the first active medium 5 (corresponds to $r_A$ in the expression of the $I_{cosN}(r)$ function);

$I_G(r)$ -    a beam profile of the Gaussian function, the intensity of which at the radius $w_{11}$ is equal to $0.001 I_{max}$;

$w_G$ -    the radius of the Gaussian profile $I_G(r)$ at the intensity level of $I_{max}/e^2$;

(continued)

| | |
|---|---|
| $w_{12}$ - | a radius of the *cos2* beam, at which intensity does not exceed $0.0001I_{max}$ ($I{\leq}0.0001I_{max}$), in the exit plane 12 of the first active medium 5; |
| $w_{13}$ - | a radius of the *cos2* beam, at which $I{\leq}0.0001I_{max}$, in the entrance plane 13 of the second active medium 9; |
| $w_{14}$ - | a radius of the cos2 beam, at which $I{\leq}0.0001I_{max}$, in the exit plane 14 of the second active medium 9, if the profile is not strongly affected by gain saturation. |

A front view of the active media 5 and 9 is shown below the illustration of the optical layout of the laser system. $D_5$ - a working diameter of the first active medium 5, $D_9$ - a working diameter of the second active medium 9. The working diameters may be slightly smaller than geometric dimensions of the active media, and are related to the perpendicularity of an edge at the end face of the active medium and to an area covered by a dielectric coating.

Parameters of the apodizator 2 are selected so that the diameter $2w_{11}$ of the *cos2* beam 3 formed in the plane 11, at which the intensity equals zero, is less than or equal to the working diameter $D_5$ of the active medium 5. Comparing the profiles (in the illustration of the plane 11), when the radius of the Gaussian profile $I_G(r)$ at the intensity level of $0.001I_{max}$ is equated to the radius $w_{11}(I{=}0)$ of the *cos2* profile, it can be seen that:

- the $w_{11}(I{=}0)$ radius of the cos2 profile is only 1.3 times larger than its $w_{cos2}(I{=}I_{max}/e^2)$ radius,
- while the $w_{cos2}(I{=}I_{max}/e^2)$ radius is larger than the corresponding radius $w_G(I{=}I_{max}/e^2)$ of the Gaussian profile.

Thus, the diameters of the beam 3 of the cos2 profile is larger than the corresponding diameters of the Gaussian beam at both the $0.5I_{max}$ and the $I_{max}/e^2$ intensity levels. The formed laser beam 3 of the modified profile fills an aperture of the active medium 5 better. Similarly, the beam 6 amplified in the first amplification module, if its profile is not strongly altered, will better fill the aperture of the active medium 9. This results in higher system efficiency than that of systems without laser beam apodization.

The beam of the cos2 profile is a weakly diffracting beam. It can be named as weakly diffracting primarily because it diffracts slowly during propagation in free space - preserves its profile over long distances even without using image relay systems. In the ideal case, the profile in the plane 12 virtually coincides with the profile which has been in the plane 11, while profiles in the planes 13 and 14, several meters away from the planes 11, 12, remain without a significant modulation. Secondly, the profile at the radius $w_{11}$ attains a real intensity zero: radiation diffraction will not occur at the edges of the active medium 5 and intensity rings due to interference will not appear. The ideal profile of the proposed truncated *cosN*-type function shape would sometimes not be formed. If the intensity at the radius $w_{11}$ is zero and it is not equal to zero at larger radial distances, peripheral non-zero intensity zones could be filtered with the help of an additional diaphragm or by a mount of the active medium 5 in the amplification module 4.

The lens or lens system 7 acts as an optical device which changes the size of the beam so that the diameter of the amplified beam 6 is maximally adapted to the transverse dimensions of the second active medium 9. An image relaying can also be done, e. g. from the plane 11 or the plane 12 to the plane 13. In the planes 13 and 14, the beam profile is also bell-shaped with the near-zero intensity ($I{\leq}0.0001I_{max}$) at a radial distance no more than 2 times larger than the radial distance at the $I_{max}/e^2$ intensity level. Therefore, the beam, which is intended to be amplified, utilizes the accumulated population inversion better in the second active medium 9 too. And thus, the output beam 10 has higher energy than the output beam obtained in a system without beam apodization. At the output of the system, slight deviations from the initial shape of the profile formed in the plane 11 are possible if gain saturation occurs at the center of the beam and the top of the profile becomes flatter. Also, slight deviations from the ideal, predefined, shape are also possible if the apodizator 2 cannot reproduce the ideal theoretical function, or there are sources of scattering on the beam path, or a distance between the active media 5 and 9 is very large.

For each laser system, a function, which allows to achieve the maximum overall efficiency of the system, but an impact of diffraction on the profile of the output beam 10 does not exceed the preset limits, is selected from the family of $I_{cosN}(r)$ functions Knowing the specific geometric parameters of the system - dimensions of the active media and the distances between them, the quantitative criteria for the beam profile can be defined as follows:

- a predetermined diameter $2r_{NUM}$ of the modified profile formed in the plane 11 (where $r_{NUM}{=}r_A{=}w_{11}$, at which $I{=}0$; or where $r_{Num}{=}r_B$, at which the intensity is very close to zero, e. g. $I{\leq}0.0001I_{max}$) does not exceed the working diameter $D_5$ of the first active medium 5, and the diameter, at which $I{=}0.5I_{max}$, is larger than the corresponding diameter of the Gaussian input beam,
- in the plane 12, a diameter $2w_{12}$, at which $I{\leq}0.0001I_{max}$, does not exceed the working diameter $D_5$ of the first active medium 5,
- diameters $2w_{13}$ and $2w_{14}$ do not exceed the working diameter $D_9$ of the second active medium 9,

- in the planes 12, 13 and 14, the intensity modulation amplitude in the beam profiles does not exceed 10%,
- in the plane 14, the maximum intensity 15 of the beam profile does not exceed a preset safe intensity value 16 by more than 10%, where the preset safe intensity value 16 is at least 10% lower than an intensity at which self-focusing and/or optical damage occurs.

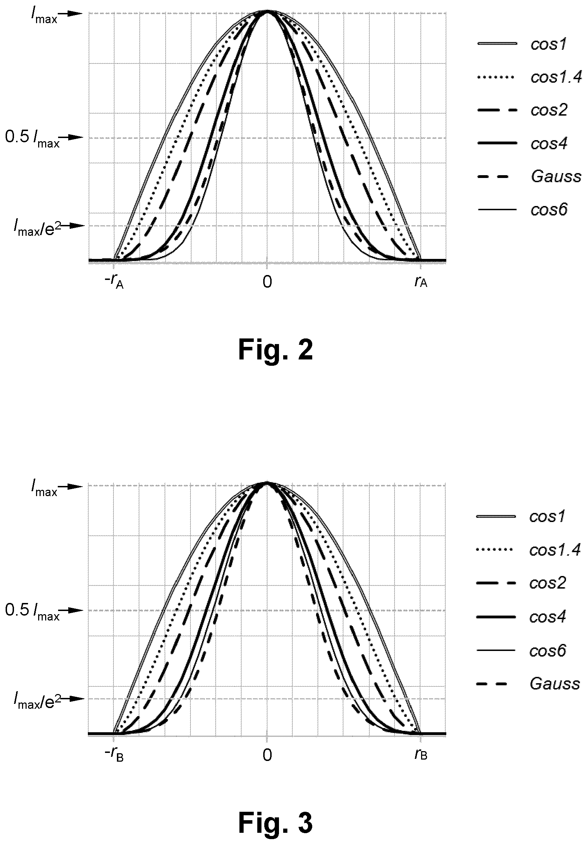

In Fig. 2, a comparison of several *cosN*-type beam profiles mutually and with the Gaussian profile is presented, when a radius of the Gaussian beam at an intensity level of $I=0.001I_{max}$ is equated to the radius $r_A$ of the *cosN* beam, where $I=0$. For a selected value of the radius $r_A$, five profiles of the $I_{cosN}(r)$ function are drawn, when the degree of the function is $N=1$; $N=1.4$; $N=2$; $N=4$; $N=6$. At the radius $r_A$, the intensity of all *cosN* profiles is equal to zero ($I=0$). The short-dash line represents the profile of the Gaussian function $I_G(r)$ (noted as *Gauss* in the legend of the graph), whose intensity in the radius $r_A$ is equal to $0.001I_{max}$. For degrees $N\leq4$, the profiles of the $I_{cosN}(r)$ function are wider than the Gaussian profile (the diameters at both the $0.5I_{max}$ and $I_{max}/e^2$ intensity levels are larger than the corresponding diameters of the Gaussian profile). The lower the degree of the $I_{cosN}(r)$ function, the better the laser beam will fill the active medium, but the slopes of the profile become steeper, thus the beam will diffract faster during propagation in free space than beams with slopes of lower steepness. The cos4 profile is very similar in shape and width to the Gaussian profile, but would still have an advantage over the Gaussian profile because the intensity of the cos4 profile at the radius $r_A$ is zero. Thus, a hard aperture at the input plane of the active medium with a diameter equal to $2r_A$ would confine the beam without diffraction. When the degree $N$ of the $I_{cosN}(r)$ function is between 4 and 6, the profiles of the $I_{cosN}(r)$ function differ little from each other and are very similar to the Gaussian profile. Starting from about the degree equal to 5.0, the width of the $I_{cosN}(r)$ function becomes smaller than that of the Gaussian function at both the $0.5I_{max}$ and the $I_{max}/e^2$ intensity levels. Comparing an area under the curve, the most similar function to the Gaussian function $I_G(r)$ is $I_{cosN}(r)$ with $N$ equal to 5.1. If further increasing the degree, the advantage of the cosN profile over the Gaussian profile in terms of the better filling of the active medium would not exist; still, there would be an advantage over the Gaussian profile because the *cosN* beam intensity at the $r_A$ radius is zero and the beam would pass a hard aperture of the diameter equal to $2r_A$ without diffraction. Applying the criterion that the aperture of the active medium confines the *cosN* beam at radii $-r_A$ and $r_A$, where $I=0$, a selection range for the degree-$N$ of the $I_{cosN}(r)$ function is between 1.0 and 5.0 for the purposes of the present invention. The most suitable function is the one with which the intensity modulation amplitude of the beam profile does not exceed 10% over the entire length of the system. In terms of propagation, the beam of the cos2.5 profile travels the longest distance without a significant modulation.

If the shape of the theoretical $I_{cosN}(r)$ function could not be formed by the apodizator 2, and the intensity at the radius not much larger than the radius at the $I_{max}/e^2$ intensity level, would not decrease to zero, it is necessary to set an intensity level at which to cut (truncate) the modified beam at the input aperture of the active medium. By choosing a preset intensity value equal to $0.0001I_{max}$, the diffraction at the edges of the active medium will still be less than the diffraction of the Gaussian beam when it is apertured at the $0.001I_{max}$ intensity level. In Fig. 3, a comparison of several cos/V-type beam profiles mutually and with the Gaussian profile is presented, when the radius of the Gaussian beam at the $I=0.001I_{max}$ intensity level is equated to the radius $r_B$ of the *cosN* beam, at which $I=0.0001I_{max}$. In this case, the *cos6* profile is also wider than the Gaussian profile. And the most similar to the Gaussian profile in shape is the *cosN* profile, with the degree $N$ of approximately 8.0 (not shown in the graph because it actually covers the curve of the Gaussian function). Thus, the most suitable shape of the beam profile also depends on the preset intensity level at which to truncate the *cosN* beam.

Applying the criterion that the aperture of the active medium will confine the *cosN* beam at radii $-r_B$ and $r_B$, where $I=0.0001I_{max}$, the selection range for the degree $N$ of the $I_{cosN}(r)$ function is between 1.2 and 8.0 for the purposes of the present invention. The most suitable function is the one with which the intensity modulation amplitude of the beam profile does not exceed 10% over the entire length of the system.

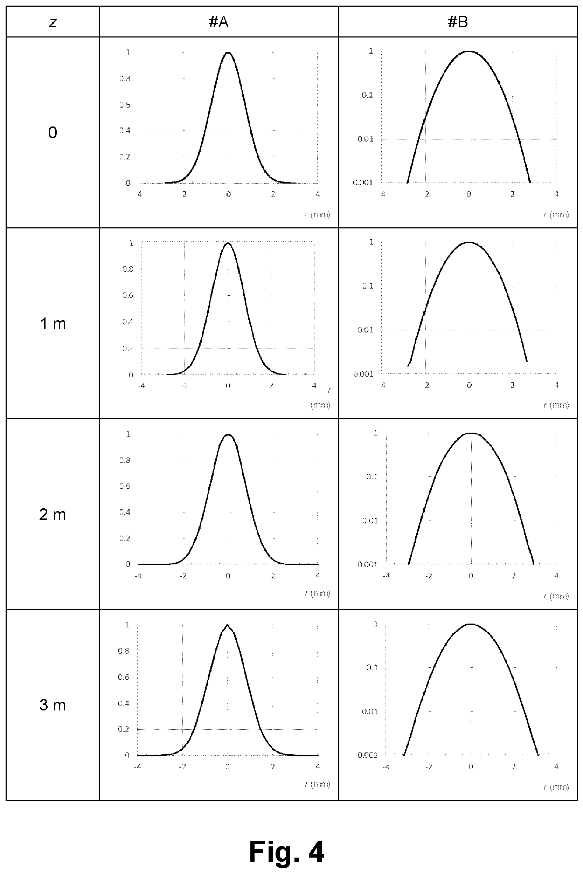

Fig. 4 presents the results of a computer simulation of the free-space propagation of a 1064 nm wavelength laser radiation beam of the Gaussian profile, when, at the beginning of the system ($z=0$), the beam is apertured in radial distances at which the intensity is equal to $0.001I_{max}$. All graphs show a normalized intensity:

> #A - the Gaussian profile in a linear intensity scale,
> #B - in a logarithmic intensity scale.

A diameter of an aperture that truncates the laser beam is 5.6 mm. In order to cut the beam at the $0.001I_{max}$ intensity level, such a beam radius must be selected for the simulation: $w_G(I=I_{max}/e^2)=1.507$ mm. From the simulation results, it can be seen that up to a distance of 3 m, the Gaussian beam remains similar to that at the beginning.

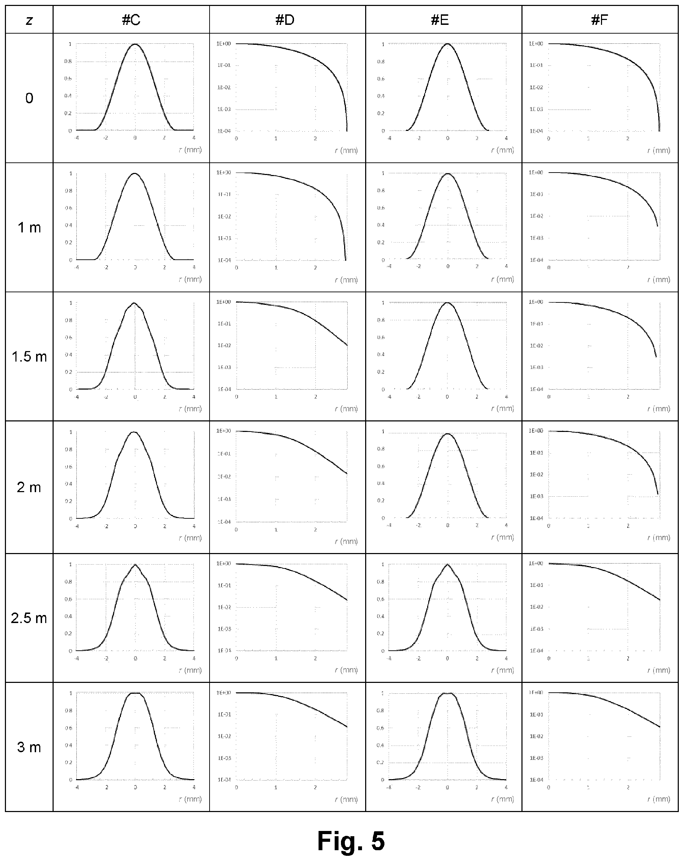

Fig.5 presents the results of a computer simulation of the free-space propagation of a 1064 nm wavelength laser radiation beam of the cos2 profile (normalized intensity):

> #C - when, at the beginning of the system ($z=0$), the cos2 beam is not apertured, or is apertured at radial distances where $I=0$; in the linear intensity scale;
> #D - the case #C in the logarithmic intensity scale;

#E - when, at the beginning of the system ($z$=0), the cos2 beam is apertured at radial distances where the intensity is equal to 0.0001$I_{max}$; in the linear intensity scale; the diameter of an aperture which truncates the beam is equal to 5.6 mm;

#F - the case #E in the logarithmic intensity scale.

When comparing the graphs, it can be seen that up to the distances of $z$=2.5 m and $z$=3 m, the *cos2* beam does not acquire significant modulation. The aperturing of the beam at the 0.0001$I_{max}$ intensity level at the beginning of the system also does not have a significant effect: at 2.5 m and 3 m distances, the beam which has been apertured at the beginning of the system (#E, #F) has a profile similar to the profile of the beam which has not been apertured at the beginning of the system (#C, #D), although their profiles slightly differ in intermediate 1.5 m and 2 m distances.

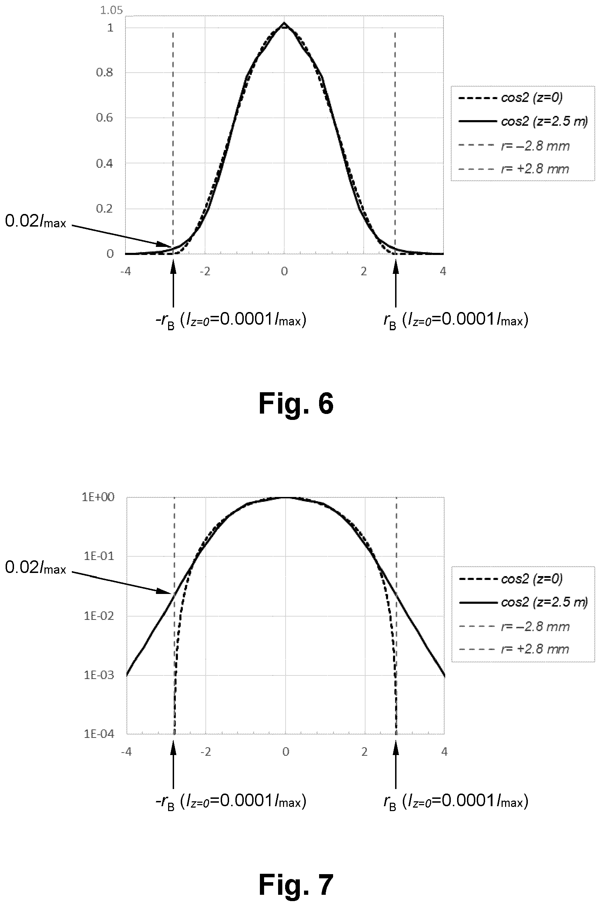

Fig. 6 and Fig. 7 depict a comparison of the cos2 profile that has traveled a distance of 2.5 m with the initial *cos2* profile at $z$=0. At $z$=0 - normalized intensity distribution, at $z$=2.5 m - non-normalized intensity distribution. In Fig. 6 - the linear intensity scale, in Fig. 7. - the logarithmic intensity scale. At $z$=0, the intensity of the cos2 profile is equal to 0.0001$I_{max}$ at the $r$=2.8 mm radial distance. It can be seen that the modulation of the profile is insignificant at $z$=2.5 m - the intensity values do not differ from the intensity values of the initial cos2 profile by more than 5%. After traveling the distance of 2.5 m, the beam becomes wider: at the $r$=2.8 mm radial distance, the intensity is equal to approximately 0.02$I_{max}$. This needs to be evaluated when calculating the beam magnification parameters before directing the beam into the second active medium to meet the criteria defined above.

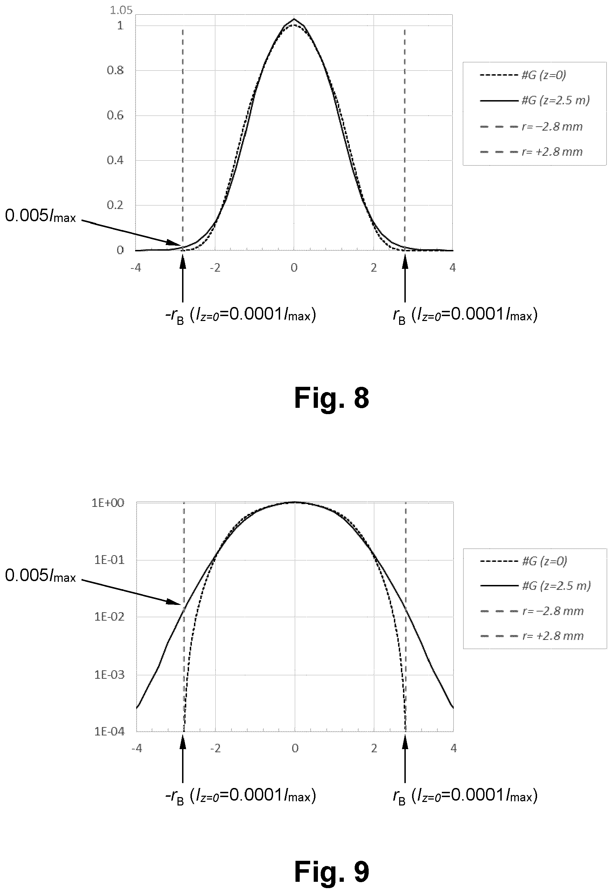

Fig. 8 and Fig. 9 illustrate a beam profile #G that can be formed by a beam shaper which uses a single serrated aperture. At $z$=0 - normalized intensity distribution, at $z$=2.5 m - non-normalized intensity distribution. In Fig. 8 - the linear intensity scale, in Fig. 9 - the logarithmic intensity scale. At $z$=0, the intensity of the profile #G is equal to 0.0001$I_{max}$ at the $r$=2.8 mm radial distance. At $z$=2.5 m, the profile #G also becomes a little bit wider: at the $r$=2.8 mm radial distance, the intensity is equal to approximately 0.005$I_{max}$, but no significant intensity modulation gets formed.

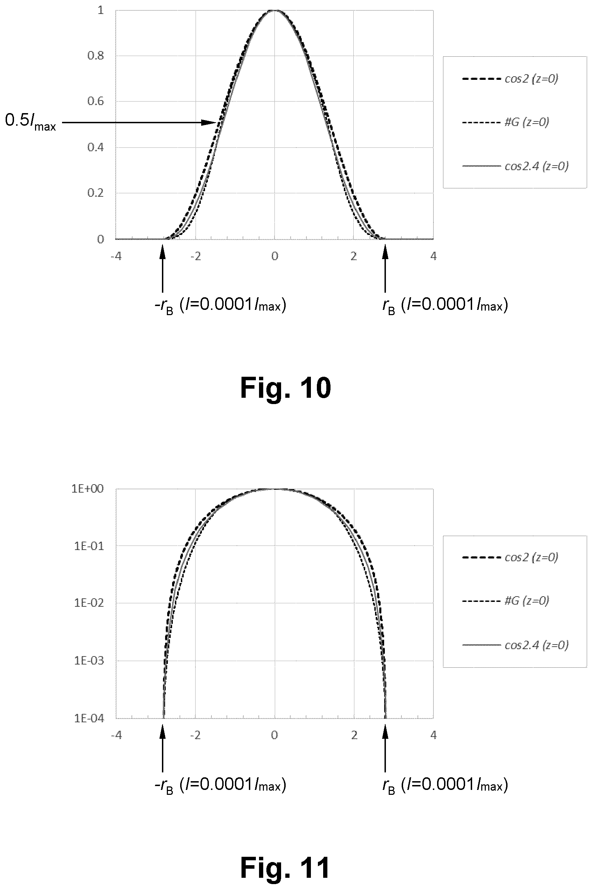

In Fig. 10 and Fig. 11, the aforementioned profile #G is compared with the *cos2* and *cos2.4* beams at $z$=0 (normalized intensities). Fig. 10 - in the linear intensity scale, Fig. 11 - in the logarithmic intensity scale. The intensity of all profiles is equal to 0.0001$I_{max}$ at the $r$=2.8 mm radial distance. The profile #G which is formed by the serrated aperture beam shaper is similar to both the cos2 and cos2.4 beam profiles at the beginning of the system ($z$=0). When compared by the width at the intensity level of 0.5$I_{max}$ - more similar to the *cos2.4* profile (while when compared by an area under the curve - most similar to the *cos2.42* profile). All beams with a profile corresponding to the function from the family of said $I_{cosN}$ ($r$) functions with the degree $N$ higher than 2 propagate in free space with even lower diffraction than the *cos2* beam. Satisfying the rule to not exceed the preset value of 0.0001$I_{max}$ at the edges of the apertures of the optical elements, the diffraction will be the same. By increasing the degree $N$ of the function, the efficiency of the system is slightly reduced, because the widths of the profiles, and thus the filling of the active medium or media with seed radiation, is worse than that in case of the *cos2* beam.

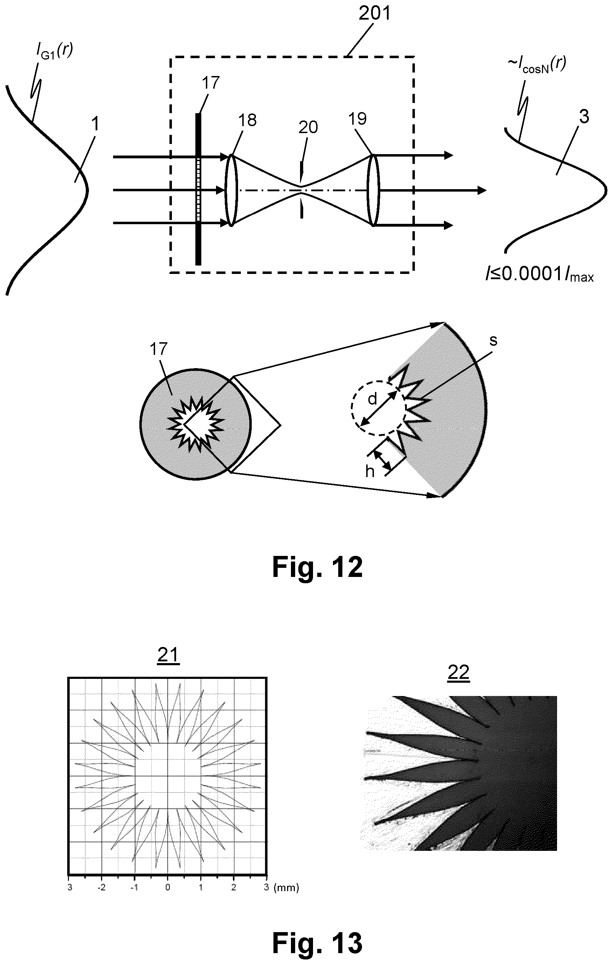

Fig. 12 shows the first embodiment of the apodizator 2 of this invention - as a diffraction-based beam shaper 201 which uses a single serrated aperture. It is known that the desired profiles can be formed with the following configuration of optical elements:

- after collimating a strongly expanded input laser beam 1 of a Gaussian profile $I_{G1}$(r), its central part have to be passed through an aperture 17, the hole of which is made up of ring-arranged teeth;
- a diffracted beam is further directed to a spatial filtering system, which blocks radiation diffracted at large angles. The spatial filtering system consists of a Keplerian-type lens telescope: two converging lenses 18, 19, located at a distance equal to a sum of focal lengths of the lenses, where an aperture with a circular hole of a small diameter is placed at the focal length of the first lens 18;
- behind the second lens 19, the beam 3 with a modified profile, similar to the $I_{cosN}$($r$) function, is formed.

A shape of the modified profile of the beam 3 depends on parameters of the serrated aperture 17 and the diameter of the input beam 1. The parameters of the serrated aperture 17 are the following (a front view of the serrated aperture 17 is shown below the optical layout of the beam shaper): a diameter $d$ of the smallest dimension of the hole, a height $h$ of the teeth, a tooth shape parameter $s$.

Fig. 13 presents a design of the serrated aperture, which can be used to form the beam profile of Fig. 8 and Fig. 9, wherein 21 is a modeled shape of the hole of the serrated aperture (technical drawing); 22 is a photo of a fragment of the real manufactured metal serrated aperture.

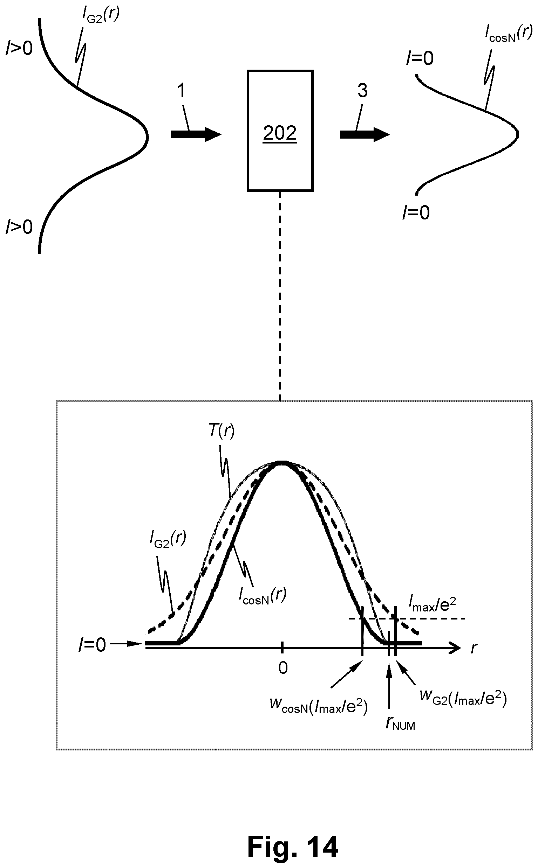

Fig. 14 shows the second embodiment of the apodizator 2 of this invention - as a beam shaper 202 featuring uniformly spatially variable losses. The beam shaper 202, characterized by a transmittance distribution $T(r)$ in the transverse plane, can filter out edges of a wide Gaussian profile $I_{G2}$($r$). By choosing a proper diameter $2w_{G2}$ of the Gaussian profile $I_{G2}$($r$), it is possible to achieve high theoretical overall transmittance of the beam shaper of at least 80% without accounting additional losses due to, for example, scattering, reflections from surfaces, etc. The beam shaper 202 with spatially variable losses can be implemented in an element that features absorption dependent on the radial distance. If the input beam 1 is of high energy, it is better to make the beam shaper 202 of a spatially inhomogeneous waveplate together with a polarization analyzer to filter out a depolarized light. Liquid crystal spatial light modulators can also be used if the seed radiation has low energy.

Due to weak diffraction when the beam propagates in free space and low diffraction at the edges of the apertures of the optical elements, more amplification modules can be installed in the laser system. In the given examples, the amplitude of the intensity modulation due to the free-space propagation of the beam does not exceed the value of 5%, and due to the sum effect - diffraction during propagation in free space and diffraction at the edges of the optical elements - does not exceed the 10%. For the $I_{cosN}(r)$ profile with the predetermined radius $r_{NUM}$ ($I \leq 0.0001 I_{max}$) of about 3 mm at the beginning of the laser system, it is possible to build a laser system of up to 4 m in length, in which the beam will propagate without intensity modulations the amplitude of which exceeds 10%. The length of 4 m is not the maximum length of the system. The larger the diameter of beam 3 with the modified profile is formed, the less diffraction occurs due to propagation in free space. For a particular system, the maximum distance up to which the beam remains unmodulated is determined individually. Moreover, in real laser systems, the top of the beam has a tendency to flatten during amplification because of gain saturation; therefore, the *cosN* beam of the degree *N* exceeding 2 can be intentionally formed at the beginning of the amplification system (in front of the first active medium 5 (see Fig. 1)). If gain saturation occurs at the center of the beam in the first active medium 5, the beam profile will become more similar to the *cos2* beam. Then, the profile of the beam which will propagate and will be amplified in the second active medium 9 will have the cos2 profile.

In summary, the present invention, protected to an extent defined by the enclosed claims, describes a device, an apodizator, for forming weakly diffracting laser beams, a high-energy laser system using such an apodizator, and a method for generation of high-energy laser radiation. A family of truncated *cosN*-type functions suitable for laser beam profiles is proposed. Beam profiles of the shape of said functions up to *N*=8.0 degree allow to increase the efficiency of the laser system of several amplification stages, compared to identical amplification systems in which the Gaussian beam propagates. At the same time, the beam profiles of this invention ensure weak diffraction of the laser beam compared to that of a Gaussian beam of the same energy apertured by active media of the same size, after the beam has traveled the same distance. Said beam profiles intended for amplification in the laser system can be formed with the help of one or more serrated apertures, or with other types of laser beams shapers.

## Claims

1. Laser beam apodizator for using in high-energy laser systems comprising one or more amplification modules, which is configured to modify a profile of an input beam and to form a beam of a modified profile, wherein an intensity change, when comparing the modified profile with the profile of the input beam, increases with an increasing radial distance *r* from an optical axis of the beam,
and wherein the modified profile is **characterized by** the following features:

   - intensity uniformly decreases according to a nonlinear function with the increasing radial distance *r* from the optical axis of the beam,
   - at a predetermined radial distance $r_{NUM}$ from the optical axis of the beam, the intensity of the beam does not exceed a preset value,

   **characterized in that**

   - the nonlinear function, according to which the intensity of the beam (3) of the modified profile decreases with the increasing radial distance *r* from the optical axis of the beam, is selected so that an amplitude of an intensity modulation of said beam (3), which has traveled a distance of at least two meters in free space, does not exceed 5%,
   - at the predetermined radial distance $r_{NUM}$ from the optical axis of the beam, its intensity does not exceed a value of $0.0001 I_{max}$, where $I_{max}$ is a maximum intensity value on the beam axis,
   - the predetermined radial distance $r_{NUM}$ is no more than two times larger than a radial distance at an intensity level of $I_{max}/e^2$.

2. Apodizator according to claim 1, **characterized in that**
the nonlinear function, according to which the intensity of the beam (3) of the modified profile decreases with the increasing radial distance *r* from the optical axis of the beam, is a function $I_{cosN}(r)$:

$$I_{\text{cosN}}(r) = I_{\max} \cdot \begin{cases} \left(\cos\left(\frac{\pi}{2r_A} \cdot r\right)\right)^N, & (-r_A \leq r \leq r_A) \\ 0, & (r < -r_A) \text{ and } (r > r_A) \end{cases},$$

where $I_{\max}$ is an intensity on the optical axis of the beam of the modified profile,
$r_A$ is a radial distance from the optical axis of the beam at which the intensity decreases down to a value of $I=0$,
$N$ is a degree of the function which is a real number between 1.0 and 8.0.

3. Apodizator according to claim 1 or claim 2, **characterized in that** the predetermined radial distance $r_{\text{NUM}}$ from the optical axis of the beam is equal to the radial distance $r_A$ at which the intensity decreases to the $I=0$ value.

4. Apodizator according to any one of claims 1 to 3, **characterized in that** it is a beam shaper (201) which comprises sequentially arranged on the optical path of the beam:

   - at least one serrated aperture (17), an operation of which is based on the diffraction of passing-through radiation on edges of a hole of the serrated aperture (17), and
   - a spatial filtering optical system (18-20) destined to block radiation diffracted at large angles.

5. Apodizator according to claim 4, **characterized in that**
the hole of the serrated aperture (17) is edged by ring-arranged tapered teeth, the tips of which are directed to a center of the hole, wherein parameters of the serrated aperture (17) such as a diameter d of the hole, a height h of the teeth and a shape parameter s of the teeth can be changed to get the desired shape of the modified profile of the beam (3).

6. Apodizator according to any one of claims 1 to 3, **characterized in that** it is a beam shaper (202) configured to create uniformly spatially variable losses due to radial distance-dependent absorption.

7. Apodizator according to any one of claims 1 to 3, **characterized in that** it is a beam shaper (202) configured to create uniformly spatially variable losses due to radial distance-dependent impact on polarization, and filtering of a depolarized light.

8. High-energy laser system comprising an apodizator (2) and one or more sequentially optically connected amplification modules located on an optical axis of the system, where the apodizator (2) is configured to form a beam (3) of a modified profile from a Gaussian input beam, said beam of the modified profile having the following features:

   - its diameter at an intensity level of $0.5I_{\max}$ is larger than a diameter of the Gaussian input beam at the intensity level of $0.5I_{\max}$, wherein $I_{\max}$ is a maximum intensity value on the axis of the beam,
   - at a predetermined radial distance $r_{\text{NUM}}$ from the axis of the beam of the modified profile, which is related to dimensions of subsequent optical elements of the laser system, its intensity does not exceed a preset value, and the beam (3) of the modified profile formed by the apodizator (2) is directed to the first of one or more amplification modules present in the system,
   **characterized in that**
   the apodizator (2) is configured according to any one of claims 1 to 7, and
   a diameter of the beam (3) of the modified profile at an entrance plane (11) of a laser or parametric gain medium (5) of the first amplification module (4), at an intensity level not higher than $0.0001I_{\max}$, does not exceed a working diameter $D_5$ of said gain medium (5).

9. High-energy laser system according to claim 8, **characterized in that** an optical length of the system is in the range from 1 to 4 meters.

10. Method of generation of high-energy laser radiation, comprising:

   - direction of an input beam of a Gaussian profile to an apodizator (2) and modification of the Gaussian profile of the input beam with the apodizator (2), thus forming a beam (3) of a modified profile,
   - amplification of the beam (3) of the modified profile by directing it to the first of one or more amplification modules of a laser system and, if necessary, amplification of the beam obtained at an output of the first amplification module in other amplification modules of the laser system, wherein

- said beam (3) of the modified profile **characterized by** the following features:

  ○ intensity uniformly decreases according to a nonlinear function with the increasing radial distance r from the optical axis of the beam, while a diameter at an intensity level of $0.5I_{max}$ is larger than a diameter of the Gaussian input beam at the intensity level of $0.5I_{max}$, wherein $I_{max}$ is a maximum intensity value on the axis of the beam, and,
  ○ at a predetermined radial distance $r_{NUM}$ from the axis of the beam of the modified profile, which is related to dimensions of subsequent optical elements of the laser system, its intensity does not exceed a preset value,

**characterized in that**
the apodizator (2) modifies the Gaussian profile of the input beam (1) forming the beam (3) of the modified profile having the following features:

- at the predetermined radial distance $r_{NUM}$ from the optical axis of the beam (3) of the modified profile, intensity does not exceed a value of $0.0001I_{max}$,
- while the predetermined radial distance $r_{NUM}$ is no more than two times larger than a radial distance at an intensity level of $I_{max}/e^2$,
- a diameter of the beam of the modified profile at an entrance plane (11) of a laser or parametric gain medium (5) of the first amplification module (4), at an intensity level not higher than $0.0001I_{max}$, does not exceed a working diameter $D_5$ of said gain medium (5).

**11.** Method according to claim 10, **characterized in that**
the nonlinear function which defines a uniform intensity decrease of the beam (3) of the modified profile with an increasing radial distance $r$ from the optical axis of the beam of the modified profile is a function $I_{cosN}(r)$:

$$I_{cosN}(r) = I_{max} \cdot \begin{cases} \left(\cos\left(\frac{\pi}{2r_A} \cdot r\right)\right)^N, & (-r_A \leq r \leq r_A) \\ 0, & (r < -r_A) \text{ and } (r > r_A) \end{cases},$$

where $I_{max}$ is an intensity on the optical axis of the beam of the modified profile,
$r_A$ is a radial distance from the optical axis of the beam at which the intensity decreases down to a value of $I=0$,
$N$ is a degree of the function which is a real number between 1.0 and 8.0.

**12.** Method according to claim 11, **characterized in that**
said modified profile of the beam (3), aiming to reproduce the desired shape of the beam profile, is changed by changing the degree $N$ of the function $I_{cosN}(r)$, which is determined by parameters of the apodizator (2).

**13.** Method according to any one of claims 10 to 12, **characterized in that** amplification of the beam (3) of the modified profile is carried out in at least two amplification modules (4, 8), where a beam (6) obtained at the output of the first amplification module (4) is directed to the second amplification module (8), after adjusting the diameter of the directed beam (6) according to a working diameter $D_9$ of a gain medium (9) of the second amplification module (8), and if more amplification is needed, the analogous actions are repeated by directing the beam to further amplification modules.

**Fig. 1**

**Fig. 2**

**Fig. 3**

| z | #A | #B |
|---|----|----|
| 0 | | |
| 1 m | | |
| 2 m | | |
| 3 m | | |

**Fig. 4**

Fig. 5

## Fig. 6

## Fig. 7

## Fig. 8

## Fig. 9

**Fig. 10**

**Fig. 11**

**Fig. 12**

**Fig. 13**

**Fig. 14**

Europäisches
Patentamt

European
Patent Office

Office européen
des brevets

# EUROPEAN SEARCH REPORT

**Application Number**

EP 24 17 0049

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JINSONG LIU, MARTIN J. THOMSON, ANDREW J. WADDIE, MOHAMMAD R. TAGHIZADEH: "Design of diffractive optical elements for high-power laser applications", OPTICAL ENGINEERING, vol. 43, no. 11, 30 November 2004 (2004-11-30), XP040194938, DOI: https://doi.org/10.1117/1.1803553 | 1-3,6,7,9 | INV. G02B27/09 H01S3/00 H01S3/23 |
| Y | * chapter 1 * | 4,5,8,11 | |
| X | US 2021/120656 A1 (CAMPBELL E MICHAEL [US] ET AL) 22 April 2021 (2021-04-22) | 1-3,6,7,9 | |
| Y | * paragraphs [0094], [0108] * | 4,5,8,11 | |
| X | MARK BOWERS, SCOTT BURKHART, SIMON COHEN, GAYLEN ERBERT, JOHN HEEBNER, MARK HERMANN, DON JEDLOVEC: "The Injection Laser System on the National Ignition Facility", PROCEEDINGS VOLUME 6451, SOLID STATE LASERS XVI: TECHNOLOGY AND DEVICES; 64511M, 9 March 2007 (2007-03-09), XP040235003, DOI: https://doi.org/10.1117/12.700478 | 10,13 | |
| Y | * abstract; | 4,5,8,11 | **TECHNICAL FIELDS SEARCHED (IPC)** G02B H01S |
| A | page 9; figures 7a,8 * | 12 | |

The present search report has been drawn up for all claims

| Place of search | Date of completion of the search | Examiner |
|---|---|---|
| Munich | 17 September 2024 | Biedermann, Benjamin |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

................................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 17 0049

This annex lists the patent family members relating to the patent documents cited in the above-mentioned European search report.
The members are as contained in the European Patent Office EDP file on
The European Patent Office is in no way liable for these particulars which are merely given for the purpose of information.

17-09-2024

| Patent document cited in search report | Publication date | Patent family member(s) | | Publication date |
|---|---|---|---|---|
| US 2021120656 A1 | 22-04-2021 | EP | 2700288 A1 | 26-02-2014 |
| | | US | 2014044226 A1 | 13-02-2014 |
| | | US | 2021120656 A1 | 22-04-2021 |
| | | US | 2024015877 A1 | 11-01-2024 |
| | | WO | 2012145534 A1 | 26-10-2012 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3990786 A, S.Jorna

- EP 2965852 A

**Non-patent literature cited in the description**

- **P.K.RAMBO et al.** *Applied Optics*, 2005, vol. 44, 2421
- **S.TOTH et al.** *Journal of Physics: Photonics*, 2020, vol. 2, 045003

- **L.M. VINOGRADSKY et al.** *Proc. SPIE*, 1998, vol. 3683, 186
- **J.ADAMONIS et al.** *Applied Optics*, 2016, vol. 55, 8007